# EUROPÄISCHE PATENTSCHRIFT

(11) **EP 3 742 009 B1**
(45) Veröffentlichungstag und Bekanntmachung des Hinweises auf die Patenterteilung: **10.05.2023**
(21) Anmeldenummer: 19176403.4
(22) Anmeldetag: 24.05.2019
(51) Int. Cl.: F16B 37/04, F16B 5/06, F16B 41/00, F16B 43/00

(54) **BEFESTIGUNGSVORRICHTUNG FÜR TOILETTENABDECKUNGEN**
FASTENING DEVICE FOR TOILET COVERS
DISPOSITIF DE FIXATION POUR RECOUVREMENTS DE TOILETTES

(43) Veröffentlichungstag der Anmeldung: 25.11.2020
(73) Patentinhaber: Geberit International AG, 8645 Jona (CH)
(72) Erfinder: BACHMANN, Simon, 8630 Rüti (CH)
(74) Vertreter: Frischknecht, Harry Ralph

(56) Entgegenhaltungen:
- WO-A1-2016/001318
- GB-A- 495 976
- US-A- 4 464 091
- US-B1- 6 287 064

## Beschreibung

### TECHNISCHES GEBIET

Die vorliegende Erfindung betrifft Befestigungsvorrichten für Toilettenabdeckungen, wie beispielsweise Toilettendeckel oder Toilettenbrillen, an Toilettenkörpern nach dem Oberbegriff von Anspruch 1.

### STAND DER TECHNIK

Aus der WO 2016/001318 ist ein Befestigungssystem für einen Toilettensitzring und einen Toilettendeckel bekannt geworden. Das Befestigungssystem umfasst einen Bolzen, der mit einer Mutter an die Sanitärkeramik befestigbar ist. Nachteilig am Befestigungssystem der WO 2016/001318 ist, dass die Mutter beim Herausdrehen des Bolzens unkontrolliert wegfallen kann. Dies ist gerade in Badezimmer ungünstig, da die Mutter beispielsweise auf den Boden fallen kann, was zu einem Bruch der Fliesen führen kann. Auch gibt es Toilettenschüsseln, bei denen im eingebauten Zustand der Raum, in welchem die Mutter liegt, nicht weiter zugänglich ist. In diesem Fall könnte die Mutter im Inneren der Toilettenschüssel verloren gehen, was eine Demontage der Toilettenschüssel nötig machen würde.

Die US 4 464 091 A zeigt eine Schraubanordnung mit einer Hülse.

### DARSTELLUNG DER ERFINDUNG

Ausgehend von diesem Stand der Technik liegt der Erfindung eine Aufgabe zugrunde, ein Befestigungssystem für eine Toilettenschüssel anzugeben, welches die Nachteile des Standes der Technik überwindet. Insbesondere soll ein Befestigungssystem angegeben werden, welches einfacher handhabbar ist.

Diese Aufgabe löst eine Befestigungsvorrichtung nach Anspruch 1. Die Befestigungsvorrichtung dient zur Befestigung einer Toilettenabdeckung an einem Toilettenkörper. Der Toilettenkörper weist einen Durchbruch, einen sich dem Durchbruch anschliessenden oberen Flächenbereich und einen sich dem Durchbruch anschliessenden unteren Flächenbereich auf. Die Befestigungsvorrichtung umfasst ein sich entlang einer Mittelachse erstreckendes Befestigungselement mit einem Aussengewinde, einem Flanschabschnitt zur Auflage am oberen Flächenbereich und einem Lagerabschnitt zur Lagerung der Toilettenabdeckung und ein Mutterelement mit einem Innengewinde, in welches das Aussengewinde eingreift. Weiter umfasst die Befestigungsvorrichtung ein Gehäuse mit einem Aufnahmeraum, in welchem das Mutterelement mindestens teilweise drehfest gelagert ist. Das Gehäuse weist eine Befestigungsstruktur auf, mit welcher das Gehäuse zum Toilettenkörper befestigbar ist. Das Gehäuse weist eine Anschlagsfläche auf, mit welcher das Gehäuse am unteren Flächenbereich anlegbar ist.

Durch die Lagerung des Mutterelements im Gehäuse, welches wiederum über seine Befestigungsstruktur zum Toilettenkörper befestigbar ist, ergeht der Vorteil, dass das Mutterelement bei entferntem Befestigungselement nicht vom Toilettenkörper wegfallen kann. Das Gehäuse bildet einen Käfig für das Mutterelement. Folglich kann das Befestigungselement beispielsweise bei einem Reinigungsvorgang vom Toilettenkörper getrennt werden, ohne dass das Mutterelement vom Toilettenkörper wegfallen kann, und anschliessend kann das Befestigungselement wieder montiert werden.

Vorzugsweise ist das Mutterelement im Aufnahmeraum mit seitlichem Spiel quer zur Mittelachse gelagert.

Durch das Spiel ist das Mutterelement im Aufnahmeraum schwimmend gelagert. Durch die schwimmende Lagerung bzw. die Lagerung mit seitlichem Spiel ergeht der Vorteil, dass eine Justage der Toilettenabdeckung auf die Form des Toilettenkörpers möglich ist. Weiter können auch Fertigungstoleranzen ausgeglichen werden.

Vorzugsweise ist das Spiel im Bereich von 2 bis 10 Millimeter, insbesondere im Bereich von 3 bis 8 Millimeter, ist.

Erfindungsgemäss weist das Mutterelement für die drehfeste Lagerung mindestens einen mutterelementseitigen Stegabschnitt auf und das Gehäuse weist einen sich in den Aufnahmeraum hineinerstreckenden gehäuseseitigen Stegabschnitt auf. Die beiden Stegabschnitte sind miteinander in Kontakt bringbar, derart, dass das beim Einschrauben oder Ausschrauben des Befestigungselements ein Durchdrehen des Mutterelements verhinderbar ist.

Vorzugsweise erstrecken sich die beiden Stegabschnitte jeweils rechtwinklig zur Mittelachse. Besonders bevorzugt sind mindestens zwei oder mindestens drei Stegabschnitte um den Umfang in gleichen Abständen verteilt angeordnet.

Vorzugsweise schlagen die beiden Stegabschnitte mit einem Wandbereich, der sich rechtwinklig von der Mittelachse weg erstreckt, aneinander an. Die Stegabschnitte sind vorzugsweise derart ausgebildet, dass das besagte Spiel auch bei den Stegabschnitten vorhanden ist.

Vorzugsweise ist das Mutterelement bezüglich einer Bewegung in Richtung der Mittelachse fest im Aufnahmeraum gelagert ist.

Demnach ist das Mutterelement in seiner Lage vorzugsweise ausschliesslich quer zur Mittelachse verschiebbar. Hierdurch kann eine definierte Lagerung des Mutterelements im Aufnahmeraum erreicht werden.

Vorzugsweise weist das Mutterelement aussenseitig einen Flanschabschnitt auf, welcher in einen Aufnahmebereich im Aufnahmeraum einragt, derart, dass eine Bewegung des Mutterelementes in Richtung der Mittelachse verunmöglicht wird.

Zwischen dem Aufnahmebereich und dem Randbereich des Flanschabschnittes ist ausreichendes Spiel vorhanden, so dass die schwimmende Lagerung des Mutterelements nicht beeinträchtigt wird.

Vorzugsweise weist das Gehäuse weiter einen Deckel auf, mit welchem der Aufnahmeraum verschlossen ist, wobei der Deckel vom Gehäuse entfernbar ist, so dass Zugang zum Aufnahmeraum zum Einlegen des Mutterelements geschaffen werden kann.

Hierdurch kann das Gehäuse mit dem Mutterelement sehr einfach hergestellt werden.

In einer ersten Ausführungsform der Befestigungsstruktur ist die Befestigungsstruktur mit einem Halteelement fest verbindbar. Das Halteelement ist von einer dem Gehäuse gegenüberliegenden Seite in den Durchbruch am Toilettenkörper einschiebbar.

Vorzugsweise ragen das Halteelement und die Befestigungsstruktur in den Durchbruch am Toilettenkörper ein, wobei die Verbindungsstelle vorzugsweise im Inneren des Durchbruchs liegt.

Vorzugsweise sind die Befestigungsstruktur und das Halteelement über eine mechanische Verbindung miteinander verbindbar, wobei die mechanische Verbindung vorzugsweise eine Rastverbindung oder eine Gewindeverbindung ist.

Vorzugsweise weist das Halteelement eine Seitenwand auf, welche einen sich entlang der Mittelachse erstreckenden Durchgang begrenzt, wobei durch den Durchgang das Befestigungselement hindurchgeführt wird, und wobei von der Seitenwand eine Anschlagsfläche sich weg erstreckt, welche direkt oder indirekt am oberen Flächenbereich des Toilettenkörpers anlegbar ist.

Vorzugsweise wird die Anschlagsfläche von Flanschabschnitt des Befestigungselementes seitlich überdeckt, so dass die Anschlagsfläche im montierten Zustand von oben her nicht sichtbar ist.

In einer zweiten Ausführungsform ist die Befestigungsstruktur derart ausgebildet ist, dass das Gehäuse direkt am Toilettenkörper befestigbar ist.

Vorzugsweise erstreckt sich die Befestigungsstruktur bei beiden Ausführungsformen von der Anschlagsfläche und vom Aufnahmeraum weg, derart, dass die Befestigungsstruktur in den Durchbruch des Sanitärkörpers einragt.

Vorzugsweise ist das Befestigungselement mit dem Flanschabschnitt direkt oder indirekt über eine Unterlegscheibe am oberen Flächenbereich anlegbar.

Vorzugsweise ist zwischen dem Flanschabschnitt oder der Unterlegscheibe eine Dichtscheibe aus einem vergleichsweise weichen Material, wie Kunststoff oder Gummi, angeordnet.

Vorzugsweise ist zwischen der Anschlagsfläche des Gehäuses und dem unteren Flächenbereich eine die Reibung zwischen der unteren Fläche und der Anschlagsfläche erhöhende Struktur vorhanden. Diese Struktur kann beispielsweise eine Unterlegscheibe aus Gummi oder Silikon sein.

Eine Anordnung umfasst einen Toilettenkörper mit einem Durchbruch, einem sich dem Durchbruch anschliessenden oberen Flächenbereich und einem sich dem Durchbruch anschliessenden unteren Flächenbereich und eine Befestigungsvorrichtung nach obiger Beschreibung. Das Befestigungselement ragt vom oberen Flächenbereich her in Durchbruch ein und geht gegenüber im Bereich des unteren Flächenbereichs mit dem im Gehäuse gelagerten Mutterelement einen Gewindeeingriff ein, wobei das Gehäuse mit der Anschlagsfläche mit dem unteren Flächenbereich in Kontakt bringbar ist, und wobei bei einem Festziehen des Befestigungselementes die Befestigungsvorrichtung zum Toilettenkörper klemmbar ist.

Ein Verfahren zur Montage einer Befestigungsvorrichtung nach obiger Beschreibung bzw. einer Anordnung nach obiger Beschreibung ist dadurch charakterisiert,
dass in einem ersten Schritt das Gehäuse mit dem Mutterelement über die Befestigungsstruktur zum Toilettenkörper befestigt wird, derart, dass die Anschlagsfläche mit dem unteren Flächenbereich in Kontakt bringbar ist,
dass in einem zweiten Schritt das Befestigungselement mit dem Aussengewinde durch den Durchbruch geführt wird und in das Innengewinde eingedreht wird bis der Flanschabschnitt in Kontakt mit dem oberen Flächenbereich kommt, und
dass in einem dritten Schritt das Befestigungselement festgezogen wird.

Weitere Ausführungsformen sind in den abhängigen Ansprüchen angegeben.

### KURZE BESCHREIBUNG DER ZEICHNUNGEN

Bevorzugte Ausführungsformen der Erfindung werden im Folgenden anhand der Zeichnungen beschrieben, die lediglich zur Erläuterung dienen und nicht einschränkend auszulegen sind. In den Zeichnungen zeigen:
- Fig. 1: eine perspektivische Explosionsdarstellung einer Befestigungsvorrichtung nach einer bevorzugten Ausführungsform der vorliegenden Erfindung;
- Fig. 2: eine Schnittdarstellung der Befestigungsvorrichtung nach Figur 1; und
- Fig. 3: eine Schnittdarstellung quer zur Mittelachse der Befestigungsvorrichtung nach Figur 1.

### BESCHREIBUNG BEVORZUGTER AUSFÜHRUNGSFORMEN

In den Figuren wird eine Befestigungsvorrichtung 1 zur Befestigung einer Toilettenabdeckung an einem Toilettenkörper 2 gezeigt. Der Toilettenkörper 2 ist typischerweise eine Toilettenschüssel und weist einen Durchbruch 3 auf. Oberhalb des Durchbruchs 3 schliesst sich ein oberer Flächenbereich 4 dem Durchbruch 3 seitlich an und unterhalb des Durchbruchs 3 schliesst sich ein unterer Flächenbereich 5 dem Durchbruch 3 seitlich an. Die Befestigungsvorrichtung 1 wird zwischen dem oberen Flächenbereich 4 und dem unteren Flächenbereich 5 geklemmt und so zum Toilettenkörper 2 befestigt. Teile der Befestigungsvorrichtung 1 werden dabei durch den Durchbruch 3 hindurchgeführt.

Die Befestigungsvorrichtung 1 umfasst ein sich entlang einer Mittelachse M erstreckendes Befestigungselement 6, ein Mutterelement 10 und ein Gehäuse 12. Das Befestigungselement 6 weist ein Aussengewinde 7, ein Flanschabschnitt 8 und ein Lagerabschnitt 9 auf.

Der Flanschabschnitt 8 dient der Auflage am oberen Flächenbereich 4. Die Auflage kann dabei direkt oder, wie in den Figuren gezeigt, indirekt sein.

Der Lagerabschnitt 9 erstreckt sich dabei vom Flanschabschnitt 8 im montierten Zustand weiter nach oben vom oberen Flächenbereich 4 weg. In der gezeigten Ausführungsform ist der Lagerabschnitt 9 als zylindrischer Lagerabschnitt 9 ausgebildet. Der Lagerabschnitt 9 dient hier als Steckkörper für die Aufnahme von entsprechenden Scharnierteilen einer Toilettenabdeckung, beispielsweise einen Toilettensitzring und/oder einen Toilettendeckel. Der Lagerabschnitt 9 kann aber auch anders ausgebildet sein. In der gezeigten Ausführungsform weist der Lagerabschnitt 9 weiterhin einen Antriebsabschnitt 26 auf. Der Antriebsabschnitt 26 ist hier als Innensechskant ausgebildet und dient der Aufnahme eines Werkzeuges zum Festziehen des Befestigungselementes 6. Weiter umfasst der Lagerabschnitt 9 hier einen Sicherungsring 32.

Das Mutterelement 10 weist ein Innengewinde 11 auf. Das Aussengewinde 7 des Befestigungselementes 6 greift dabei in das Innengewinde 11 ein. Über diese Gewindeverbindung kann die Befestigungsvorrichtung 1 gegenüber dem Toilettenkörper 2 verspannt werden.

Das Gehäuse 12 weist einen Aufnahmeraum 13 auf. Im Aufnahmeraum 13 ist das Mutterelement 10 mindestens teilweise drehfest gelagert. Das heisst, das Mutterelement 10 ist entweder vollständig drehfest im Gehäuse 12 gelagert oder es sind leichte Verdrehungen innerhalb eines vorbestimmten Spiels möglich.

Weiter weist das Gehäuse 12 eine Befestigungsstruktur 14 auf. Mit der Befestigungsstruktur 14 kann das Gehäuse 12 am Toilettenkörper 2 befestigt werden. Das heisst, mit der Befestigungsstruktur 14 ist eine Vormontage des Gehäuses 12 mit Mutterelement 10 zum Toilettenkörper 2 möglich, bevor das Befestigungselement 6 mit dem Aussengewinde 7 in das Innengewinde 11 des Mutterelementes 10 eingreift. Diese Befestigung über die Befestigungsstruktur 14 hat weiterhin den Vorteil, dass bei Reinigungsarbeiten, bei welchen unter Umständen das Befestigungselement 6 aus dem Innengewinde 11 des Mutterelementes 10 rausgezogen wird, das Gehäuse 12 weiterhin mit dem Toilettenkörper 2 in Verbindung steht und somit nicht vom Toilettenkörper 2 wegfallen kann.

Weiter weist das Gehäuse 12 eine Anschlagsfläche 15 auf, mit welcher das Gehäuse 12 direkt oder indirekt am unteren Flächenbereich 5 anlegbar ist.

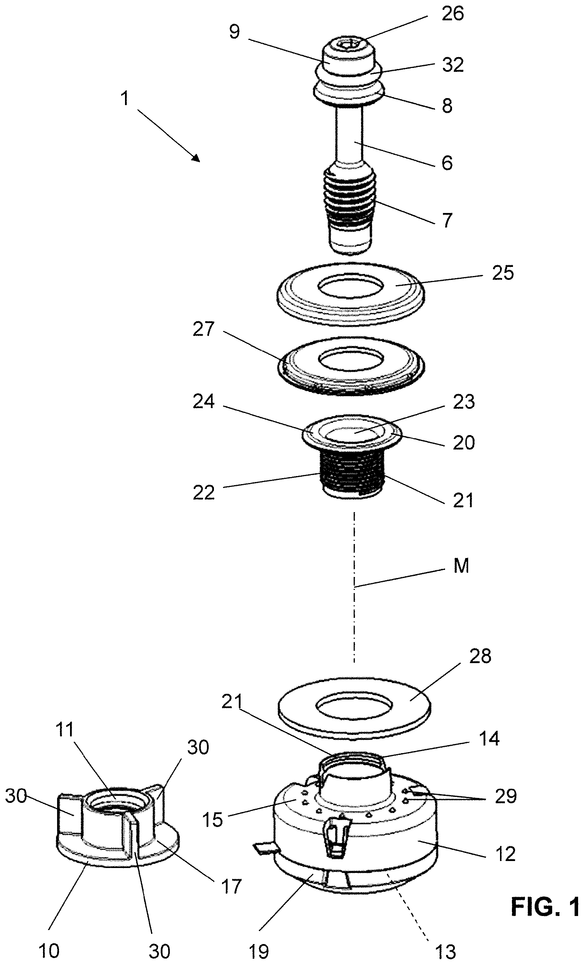

Unter Bezugnahme auf die Explosionsdarstellung gemäss der Figur 1 werden in der Folge weitere Merkmal der bevorzugten Ausführungsform beschrieben.

In der gezeigten Ausführungsform ist weiterhin eine Unterlegscheibe 25 vorhanden, über welche der Flanschabschnitt 8 an dem oberen Flächenbereich 4 anliegt. Unterhalb der Unterlegscheibe 25 ist weiter eine Dichtscheibe 27 angeordnet. Die Dichtscheibe 27 ist typischerweise aus einem weichen Material, wie Gummi oder Silikon. Die Dichtscheibe 27 hat zwei verschiedene Funktionen. Einerseits kann ein Zerkratzen des oberen Flächenbereichs 4 durch die Unterlegscheibe 25 vermieden werden. Andererseits wirkt die Dichtscheibe 27 als Dichtscheibe, so dass bei Reinigungsarbeiten, bei welchen das Befestigungselement 6 nicht entfernt wird, keine Reinigungsflüssigkeit in den Durchbruch 3 gelangen kann.

Im unteren Bereich zwischen der Anschlagsfläche 15 und dem unteren Flächenbereich 5 ist eine Scheibe 28 angeordnet. Die Scheibe 28 ist vorzugsweise ebenfalls aus einem weichen Material, wie Gummi oder Silikon, und dient dazu, die Reibung zwischen dem unteren Flächenbereich 5 und der Anschlagsfläche 15 zu erhöhen, so dass bei einer Betätigung des Befestigungselementes 6 das Gehäuse 12 mit dem Mutterelement 10 sich nicht drehen kann. In der gezeigten Ausführungsform stehen von der Anschlagsfläche 15 optionale Eingriffszacken 29 ab, welche in die Scheibe 28 entsprechend eingreifen.

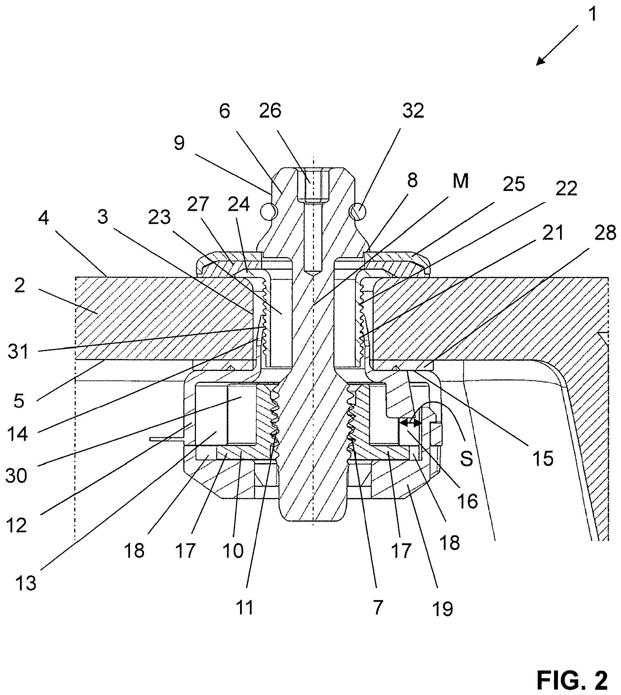

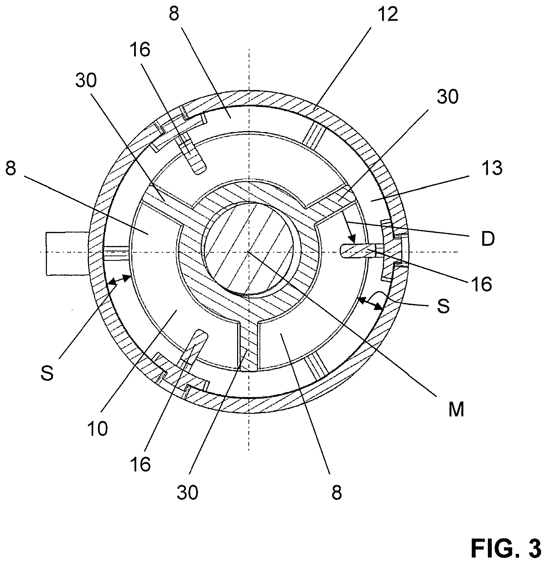

Das Mutterelement 10 ist, wie von den Figuren 2 und 3 erkannt werden kann, mit seitlichen Spiel S quer zur Mittelachse M im Aufnahmeraum 13 gelagert. Das heisst, das Mutterelement 10 kann bei feststehendem Gehäuse 12 sich innerhalb des Gehäuses 12 bewegen und somit resultiert eine Relativbewegung des Mutterelementes 10 zum Durchbruch 3 im Toilettenkörper 2. Das seitliche Spiel S ist in den Figuren 2 und 3 entsprechend eingezeichnet. Besonders bevorzugt ist das Spiel S im Bereich von 2 bis 10 Millimetern, insbesondere im Bereich von 3 bis 8 Millimetern. Andere Abmessungen sind je nach Durchmesser des Durchbruchs 3 ebenfalls denkbar.

In der gezeigten Ausführungsform weist das Mutterelement 10 für die drehfeste Lagerung mindestens einen mutterelementseitigen Stegabschnitt 30 auf. Das Gehäuse 12 weist einen sich in den Aufnahmeraum 13 hineinerstreckenden gehäuseseitigen Stegabschnitt 16 auf.

Die beiden Stegabschnitte 30, 16 sind dabei miteinander in Kontakt bringbar und zwar derart, dass beim Einschrauben oder Ausschrauben des Befestigungselementes 6 ein Durchdrehen des Mutterelementes 10 im Gehäuse 12 verhinderbar ist. In der Figur 3 wird gezeigt, dass jeweils drei Stegabschnitte 30, 16 in gleichmässigem Abstand um den Umfang der Mittelachse M verteilt angeordnet sind. Bei einer Drehbewegung des Befestigungselementes 6 verdreht sich das Mutterelement 10 entlang der Drehrichtung D, wobei dann der mutterelementseitige Stegabschnitt 30 auf den gehäuseseitigen Stegabschnitt 16 trifft und an diesem entsprechend anschlägt. Ein weiteres Drehen wird durch diesen Anschlag verhindert. Die Stegabschnitte 16, 30 erstrecken sich jeweils radial zur Mittelachse M und sind so ausgebildet, dass bei jeder Position des Mutterelementes 10 in dem Gehäuse 12, welche wie oben beschrieben aufgrund des seitlichen Spiels S variieren kann, ein Anschlag zwischen mindestens einem Paar von Stegabschnitten 16, 30 bei jeder Lage des Mutterelementes 10 im Gehäuse 12 erreichbar ist.

Von der Schnittdarstellung der Figur 2 wird weiter gezeigt, dass das Mutterelement 10 bezüglich einer Bewegung in Richtung der Mittelachse M fest im Aufnahmeraum 13 gelagert ist. Das heisst, das Mutterelement 10 ist ausschliesslich in eine Richtung quer zur Mittelachse M im Aufnahmeraum 13 bewegbar. Das Mutterelement 10 weist aussenseitig einen Flanschabschnitt 17 auf, welcher in einen seitlichen Aufnahmebereich 18 in den Aufnahmeraum 13 einragt. Dabei ragt der Flanschabschnitt 17 derart in den Aufnahmeraum 18 ein, dass eine Bewegung des Mutterelementes 10 in Richtung der Mittelachse M verunmöglicht wird. Dieses Einragen des Flanschabschnittes 17 in den Aufnahmebereich 18 wird in der Figur 2 gezeigt.

Das Gehäuse 12 weist weiterhin einen Deckel 19 auf, mit welchem der Aufnahmeraum 13 verschlossen ist. Bei entferntem Deckel 19 wird Zugang zum Aufnahmeraum 13 geschaffen, so dass das Mutterelement 10 entsprechend in den Aufnahmeraum 13 eingelegt werden kann. Der Deckel 19 steht über Rastverbindungselemente 31 mit dem restlichen Teil von Gehäuse 12 in Verbindung.

Die Befestigungsstruktur 14 ist mit einem Halteelement 20 fest verbindbar. In der gezeigten Ausführungsform wird die Befestigungsstruktur 14 von dem unteren Flächenbereich 4 in den Durchbruch 3 eingeschoben und das Halteelement 20 wird vom oberen Flächenbereich 4 her in den Durchbruch 3 eingeschoben. Zwischen dem Halteelement 20 und der Befestigungsstruktur 14 ist eine mechanische Verbindung vorgesehen. In der gezeigten Ausführungsform ist dies eine Rastverbindung. Die Verbindung kann aber auch eine Gewindeverbindung sein. Das Halteelement 20 ist mit der Befestigungsstruktur 14 über eine mechanische Verbindung verbindbar.

In der gezeigten Ausführungsform weist das Halteelement 20 eine Seitenwand 22 auf, welche einen sich entlang der Mittelachse M erstreckenden Durchgang 23 begrenzt. Durch den Durchgang 23 wird in der montierten Lage das Befestigungselement 6 hindurchgeführt und gelangt zum Mutterelement 10. Von der Seitenwand 22 erstreckt sich eine Anschlagsfläche 24 seitlich weg. Über die Anschlagsfläche 24 liegt das Halteelement direkt am oberen Flächenbereich 4 des Toilettenkörpers 2 an.

In der gezeigten Ausführungsform wird die Anschlagsfläche 24 des Halteelementes 20 durch die Unterlegscheibe 25 und die Dichtscheibe 27 abgedeckt.

In einer alternativen, in den Figuren nicht gezeigten Ausführungsform, ist die Befestigungsstruktur 14 derart ausgebildet, dass das Gehäuse 12 direkt am Toilettenkörper 2 befestigbar ist. Beispielsweise wäre es denkbar, dass sich von der Anschlagsfläche 15 des Gehäuses 12 nicht dargestellte Federarme wegerstrecken, welche von unten her durch den Durchbruch 3 hindurchragen und mit entsprechenden Hinterschnitten am oberen Flächenbereich 4 anliegen.

Die gezeigte Ausführungsform mit dem Halteelement und der mechanischen Verbindung zwischen dem Halteelement 20 und der Befestigungsstruktur 14 hat den Vorteil, dass eine Klemmverbindung zwischen den beiden Flächenbereichen 3, 4 bereitstellbar ist. Insofern kann bereits bei der Montage eine Verbindung geschaffen werden, so dass beim Einschrauben des Aussengewindes 7 in das Innengewinde 11 des Mutterelementes 10 ein Verdrehen zwischen dem Gehäuse 12 und dem Toilettenkörper 2 vermeidbar ist.

Ein Verfahren zur Montage einer Befestigungsvorrichtung nach obiger Beschreibung umfasst folgende Schritte:
- In einem ersten Schritt wird das Gehäuse 12 mit dem Mutterelement 10 über die Befestigungsstruktur 14 zum Toilettenkörper 2 befestigt. Dabei ist die Anschlagsfläche 15 mit dem unteren Flächenbereich 5 in Kontakt bringbar ist.
- In einem zweiten Schritt wird das Befestigungselement 6 mit dem Aussengewinde 7 durch den Durchbruch 3 geführt und in das Innengewinde 11 eingedreht bis der Flanschabschnitt 8 in Kontakt mit dem oberen Flächenbereich 4 kommt.
- In einem dritten Schritt wird das Befestigungselement 6 festgezogen.

**BEZUGSZEICHENLISTE**

| | | | |
|---|---|---|---|
| 1 | Befestigungsvorrichtung | 24 | Anschlagsfläche |
| 2 | Toilettenkörper | 25 | Unterlegscheibe |
| 3 | Durchbruch | 26 | Antriebsabschnitt |
| 4 | oberer Flächenbereich | 27 | Dichtscheibe |
| 5 | unterer Flächenbereich | 28 | Scheibe |
| 6 | Befestigungselement | 29 | Eingriffszacken |
| 7 | Aussengewinde | 30 | mutterseitiger Stegabschnitt |
| 8 | Flanschabschnitt | 31 | Rastverbindungselemente |
| 9 | Lagerabschnitt | 32 | Sicherungsring |
| 10 | Mutterelement | M | Mittelachse |
| 11 | Innengewinde | D | Drehrichtung |
| 12 | Gehäuse | | |
| 13 | Aufnahmeraum | | |
| 14 | Befestigungsstruktur | | |
| 15 | Anschlagsfläche | | |
| 16 | gehäuseseitiger Stegabschnitt | | |
| 17 | Flanschabschnitt | | |
| 18 | Aufnahmebereich | | |
| 19 | Deckel | | |
| 20 | Halteelement | | |
| 21 | Rastverbindung | | |
| 22 | Seitenwand | | |
| 23 | Durchgang | | |

## Patentansprüche

1. Befestigungsvorrichtung (1) zur Befestigung einer Toilettenabdeckung an einen Toilettenkörper (2) mit einem Durchbruch (3), einem sich dem Durchbruch (3) anschliessenden oberen Flächenbereich (4) und einem sich dem Durchbruch (3) anschliessenden unteren Flächenbereich (5), umfassend
ein sich entlang einer Mittelachse (M) erstreckendes Befestigungselement (6) mit einem Aussengewinde (7), einem Flanschabschnitt (8) zur Auflage am oberen Flächenbereich (4) und einem Lagerabschnitt (9) zur Lagerung der Toilettenabdeckung, und
ein Mutterelement (10) mit einem Innengewinde (11), in welches das Aussengewinde (7) eingreift,
wobei die Befestigungsvorrichtung (1) weiter ein Gehäuse (12) mit einem Aufnahmeraum (13) aufweist, in welchem das Mutterelement (10) mindestens teilweise drehfest gelagert ist,
**dadurch gekennzeichnet,**
**dass** das Gehäuse (12) eine Befestigungsstruktur (14) aufweist, mit welcher das Gehäuse (12) zum Toilettenkörper (2) befestigbar ist, und wobei das Gehäuse (12) eine Anschlagsfläche (15) aufweist, mit welcher das Gehäuse (12) am unteren Flächenbereich (5) anlegbar ist, und dass
das Mutterelement (10) für die drehfeste Lagerung mindestens einen mutterelementseitigen Stegabschnitt (30) aufweist und dass das Gehäuse (12) einen sich in den Aufnahmeraum (13) hineinerstreckenden gehäuseseitigen Stegabschnitt (16) aufweist, wobei die beiden Stegabschnitte (30, 16) miteinander in Kontakt bringbar sind, derart, dass das beim Einschrauben oder Ausschrauben des Befestigungselements (6) ein Durchdrehen des Mutterelements (10) verhinderbar ist.

2. Befestigungsvorrichtung (1) nach Anspruch 1, **dadurch gekennzeichnet, dass** das Mutterelement (10) im Aufnahmeraum (13) mit seitlichem Spiel (S) quer zur Mittelachse (M) gelagert ist.

3. Befestigungsvorrichtung (1) nach Anspruch 2, **dadurch gekennzeichnet, dass** das Spiel (S) im Bereich von 2 bis 10 Millimeter, insbesondere im Bereich von 3 bis 8 Millimeter, ist.

4. Befestigungsvorrichtung (1) nach einem der vorhergehenden Ansprüche, **dadurch gekennzeichnet, dass** das Mutterelement (10) bezüglich einer Bewegung in Richtung der Mittelachse (M) fest im Aufnahmeraum (13) gelagert ist.

5. Befestigungsvorrichtung (1) nach einem der vorhergehenden Ansprüche, **dadurch gekennzeichnet, dass** das Mutterelement (10) aussenseitig einen Flanschabschnitt (17) aufweist, welcher in einen Aufnahmebereich (18) im Aufnahmeraum (13) einragt, derart, dass eine Bewegung des Mutterelementes (12) in Richtung der Mittelachse (M) verunmöglicht wird.

6. Befestigungsvorrichtung (1) nach einem der vorhergehenden Ansprüche, **dadurch gekennzeichnet, dass** das Gehäuse (12) weiter einen Deckel (19) aufweist, mit welchem der Aufnahmeraum (13) verschlossen ist, wobei der Deckel (19) vom Gehäuse (12) entfernbar ist, so dass Zugang zum Aufnahmeraum (13) zum Einlegen des Mutterelements (10) geschaffen werden kann.

7. Befestigungsvorrichtung (1) nach einem der vorhergehenden Ansprüche, **dadurch gekennzeichnet, dass** die Befestigungsstruktur (14) mit einem Halteelement (20) fest verbindbar ist, welches Halteelement (20) von einer dem Gehäuse (12) gegenüberliegenden Seite in den Durchbruch (3) am Toilettenkörper (2) einschiebbar ist.

8. Befestigungsvorrichtung (1) nach Anspruch 7, **dadurch gekennzeichnet, dass** die Befestigungsstruktur (14) und das Halteelement (20) über eine mechanische Verbindung miteinander verbindbar sind, wobei die mechanische Verbindung vorzugsweise eine Rastverbindung (21) oder eine Gewindeverbindung ist.

9. Befestigungsvorrichtung (1) nach einem der vorhergehenden Ansprüche 7 bis 8, **dadurch gekennzeichnet, dass** das Halteelement (20) eine Seitenwand (22) aufweist, welche einen sich entlang der Mittelachse (M) erstreckenden Durchgang (23) begrenzt, wobei durch den Durchgang (23) das Befestigungselement (6) hindurchgeführt wird, und wobei von der Seitenwand (22) eine Anschlagsfläche (24) sich weg erstreckt, welche direkt oder indirekt am oberen Flächenbereich (4) des Toilettenkörpers (2) anlegbar ist.

10. Befestigungsvorrichtung (1) nach einem der vorhergehenden Ansprüche 1 bis 6, **dadurch gekennzeichnet, dass** die Befestigungsstruktur derart ausgebildet ist, dass das Gehäuse direkt am Toilettenkörper befestigbar ist.

11. Befestigungsvorrichtung (1) nach einem der vorhergehenden Ansprüche, **dadurch gekennzeichnet, dass** sich die Befestigungsstruktur (14) von der Anschlagsfläche (15) und vom Aufnahmeraum (13) weg erstreckt, derart, dass die Befestigungsstruktur (14) in den Durchbruch (3) des Sanitärkörpers (2) einragt.

12. Befestigungsvorrichtung (1) nach einem der vorhergehenden Ansprüche, **dadurch gekennzeichnet,**
**dass** das Befestigungselement (6) mit dem Flanschabschnitt direkt oder indirekt über eine Unterlegscheibe (25) am oberen Flächenbereich (4) anlegbar ist; und/oder
**dass** zwischen der Anschlagsfläche (15) des Gehäuses (12) und dem unteren Flächenbereich (5) eine die Reibung zwischen dem unteren Flächenbereich (5) und der Anschlagsfläche (15) erhöhende Struktur vorhanden ist.

13. Anordnung umfassend einen Toilettenkörper (2) mit einem Durchbruch (3), einem sich dem Durchbruch (3) anschliessenden oberen Flächenbereich (4) und einem sich dem Durchbruch (3) anschliessenden unteren Flächenbereich (5) und eine Befestigungsvorrichtung nach einem der vorhergehenden Ansprüche, wobei das Befestigungselement (6) vom oberen Flächenbereich her in Durchbruch (3) einragt und gegenüber im Bereich des unteren Flächenbereichs (5) mit dem im Gehäuse (12) gelagerten Mutterelement (10) einen Gewindeeingriff eingeht, wobei das Gehäuse (12) mit der Anschlagsfläche mit dem unteren Flächenbereich (5) in Kontakt bringbar ist, und wobei bei einem Festziehen des Befestigungselementes (6) die Befestigungsvorrichtung zum Toilettenkörper (2) klemmbar ist.

14. Verfahren zur Montage einer Befestigungsvorrichtung nach einem der vorhergehenden Ansprüche 1 bis 12 bzw. einer Anordnung nach Anspruch 13, **dadurch gekennzeichnet,**
**dass** in einem ersten Schritt das Gehäuse (12) mit dem Mutterelement (10) über die Befestigungsstruktur zum Toilettenkörper (2) befestigt wird, derart, dass die Anschlagsfläche (15) mit dem unteren Flächenbereich (5) in Kontakt bringbar ist,
**dass** in einem zweiten Schritt das Befestigungselement (6) mit dem Aussengewinde (7) durch den Durchbruch (3) geführt wird und in das Innengewinde (11) eingedreht wird bis der Flanschabschnitt (8) in Kontakt mit dem oberen Flächenbereich (4) kommt, und
**dass** in einem dritten Schritt das Befestigungselement (6) festgezogen wird.

## Claims

1. Fastening device (1) for fastening a toilet cover to a toilet body (2) with an opening (3), an upper surface area (4) adjoining the opening (3) and a lower surface area (5) adjoining the opening (3), comprising
a fastening element (6) extending along a central axis (M) and having an external thread (7), a flange portion (8) for bearing on the upper surface region (4) and a bearing portion (9) for bearing the toilet cover, and
a nut element (10) with an internal thread (11) in which the external thread (7) engages,
wherein the fastening device (1) further comprises a housing (12) with a receiving space (13) in which the nut element (10) is at least partially non-rotatably mounted,
**characterized in**
**in that** the housing (12) has a fastening structure (14) with which the housing (12) can be fastened to the toilet body (2), and the housing (12) having a stop surface (15) with which the housing (12) can be placed against the lower surface area (5), and **in that**
the nut element (10) has at least one nut element side web portion (30) for the non-rotatable mounting, and **in that** the housing (12) has a housing side web portion (16) extending into the receiving space (13), it being possible to bring the two web portions (30, 16) into contact with one another in such a way that the nut element (10) can be prevented from rotating when the fastening element (6) is screwed in or unscrewed.

2. Fastening device (1) according to claim 1, **characterised in that** the nut element (10) is mounted in the receiving space (13) with lateral play (S) transverse to the centre axis (M).

3. Fastening device (1) according to claim 2, **characterised in that** the play (S) is in the range of 2 to 10 millimetres, in particular in the range of 3 to 8 millimetres.

4. Fastening device (1) according to one of the preceding claims, **characterized in that** the nut element (10) is fixedly mounted in the receiving space (13) with respect to a movement in the direction of the centre axis (M).

5. Fastening device (1) according to one of the preceding claims, **characterised in that** the nut element (10) has a flange section (17) on the outside, which projects into a receiving area (18) in the receiving space (13) in such a way that a movement of the nut element (12) in the direction of the centre axis (M) is made impossible.

6. Fastening device (1) according to any one of the preceding claims, **characterised in that** the housing (12) further comprises a cover (19) with which the receiving space (13) is closed, the cover (19) being removable from the housing (12) so as to provide access to the receiving space (13) for insertion of the nut element (10).

7. Fastening device (1) according to one of the preceding claims, **characterised in that** the fastening structure (14) can be firmly connected to a retaining element (20), which retaining element (20) can be inserted into the opening (3) on the toilet body (2) from a side opposite the housing (12).

8. Fastening device (1) according to claim 7, **characterized in that** the fastening structure (14) and the retaining element (20) can be connected to one another by means of a mechanical connection, the mechanical connection preferably being a latching connection (21) or a threaded connection.

9. Fastening device (1) according to one of the preceding claims 7 to 8, **characterized in that** the retaining element (20) has a side wall (22) which bounds a passage (23) extending along the centre axis (M), the fastening element (6) being guided through the passage (23), and a stop surface (24) extending away from the side wall (22), which stop surface (24) can be placed directly or indirectly against the upper surface area (4) of the toilet body (2).

10. Fastening device (1) according to one of the preceding claims 1 to 6, **characterised in that** the fastening structure is designed in such a way that the housing can be fastened directly to the toilet body.

11. Fastening device (1) according to one of the preceding claims, **characterised in that** the fastening structure (14) extends away from the stop surface (15) and from the receiving space (13) in such a way that the fastening structure (14) projects into the opening (3) of the sanitary body (2).

12. Fastening device (1) according to one of the preceding claims, **characterized in**
**that** the fastening element (6) with the flange section can be applied directly or indirectly via a washer (25) to the upper surface area (4); and/or
in that a structure increasing the friction between the lower surface area (5) and the stop surface (15) is present between the stop surface (15) of the housing (12) and the lower surface area (5).

13. An arrangement comprising a toilet body (2) having an opening (3), an upper surface area (4) adjoining the opening (3) and a lower surface area (5) adjoining the opening (3), and a fastening device according to any one of the preceding claims, wherein the fastening element (6) projects from the upper surface area into the opening (3) and, opposite in the region of the lower surface area (5), enters into threaded engagement with the nut element (10) mounted in the housing (12), wherein the housing (12) can be brought into contact with the lower surface area (5) by means of the stop surface, and wherein, when the fastening element (6) is tightened, the fastening device can be clamped to the toilet body (2).

14. Method of assembling a fastening device according to any one of the preceding claims 1 to 12 or an assembly according to claim 13, **characterized in**,
**in that**, in a first step, the housing (12) with the nut element (10) is fastened to the toilet body (2) via the fastening structure in such a way that the stop surface (15) can be brought into contact with the lower surface area (5),
**in that**, in a second step, the fastening element (6) is guided with the external thread (7) through the opening (3) and is screwed into the internal thread (11) until the flange portion (8) comes into contact with the upper surface area (4), and
that in a third step the fastening element (6) is tightened.

## Revendications

1. Dispositif de fixation (1) pour la fixation d'un couvercle de toilettes sur un corps de toilettes (2) avec un passage (3), une zone de surface supérieure (4) se raccordant au passage (3) et une zone de surface inférieure (5) se raccordant au passage (3), comprenant
un élément de fixation (6) s'étendant le long d'un axe central (M) avec un filetage extérieur (7), une section de collerette (8) pour l'appui sur la zone de surface supérieure (4) et une section de palier (9) pour le support du couvercle de toilette, et
un élément d'écrou (10) avec un filetage intérieur (11) dans lequel s'engage le filetage extérieur (7),
le dispositif de fixation (1) présentant en outre un boîtier (12) avec un espace de réception (13) dans lequel l'élément d'écrou (10) est logé au moins partiellement de manière non-rotative,
**caractérisé en ce que**
**en ce que** le boîtier (12) présente une structure de fixation (14) avec laquelle le boîtier (12) peut être fixé au corps de toilette (2), et le boîtier (12) présentant une surface de butée (15) avec laquelle le boîtier (12) peut être appliqué contre la zone de surface inférieure (5), et **en ce que**
l'élément d'écrou (10) pour le logement non-rotatif présente au moins une section de nervure (30) côté élément d'écrou et **en ce que** le boîtier (12) présente une section de nervure (16) côté boîtier s'étendant dans l'espace de réception (13), les deux sections de nervure (30, 16) pouvant être amenées en contact l'une avec l'autre de telle sorte que, lors du vissage ou du dévissage de l'élément de fixation (6), l'élément d'écrou (10) puisse être empêché de tourner dans le vide.

2. Dispositif de fixation (1) selon la revendication 1, **caractérisé en ce que** l'élément d'écrou (10) est logé dans l'espace de réception (13) avec un jeu latéral (S) transversal à l'axe central (M).

3. Dispositif de fixation (1) selon la revendication 2, **caractérisé en ce que** le jeu (S) est compris dans la plage de 2 à 10 millimètres, en particulier dans la plage de 3 à 8 millimètres.

4. Dispositif de fixation (1) selon l'une quelconque des revendications précédentes, **caractérisé en ce que** l'élément d'écrou (10) est monté dans l'espace de réception (13) de manière fixe par rapport à un mouvement en direction de l'axe central (M).

5. Dispositif de fixation (1) selon l'une quelconque des revendications précédentes, **caractérisé en ce que** l'élément d'écrou (10) présente du côté extérieur une section de collerette (17) qui pénètre dans une zone de réception (18) dans l'espace de réception (13), de telle sorte qu'un mouvement de l'élément d'écrou (12) en direction de l'axe central (M) est rendu impossible.

6. Dispositif de fixation (1) selon l'une quelconque des revendications précédentes, **caractérisé en ce que** le boîtier (12) comprend en outre un couvercle (19) avec lequel l'espace de réception (13) est fermé, le couvercle (19) pouvant être retiré du boîtier (12) de sorte qu'un accès à l'espace de réception (13) peut être créé pour l'insertion de l'élément d'écrou (10).

7. Dispositif de fixation (1) selon l'une quelconque des revendications précédentes, **caractérisé en ce que** la structure de fixation (14) peut être reliée de manière fixe à un élément de retenue (20), lequel élément de retenue (20) peut être inséré dans le passage (3) sur le corps de toilette (2) depuis un côté opposé au boîtier (12).

8. Dispositif de fixation (1) selon la revendication 7, **caractérisé en ce que** la structure de fixation (14) et l'élément de retenue (20) peuvent être reliés entre eux par une liaison mécanique, la liaison mécanique étant de préférence une liaison par encliquetage (21) ou une liaison filetée.

9. Dispositif de fixation (1) selon l'une quelconque des revendications précédentes 7 à 8, **caractérisé en ce que** l'élément de retenue (20) comprend une paroi latérale (22) qui délimite un passage (23) s'étendant le long de l'axe central (M), passage (23) à travers lequel l'élément de fixation (6) est guidé, et dans lequel une surface de butée (24) s'étend à partir de la paroi latérale (22), la surface de butée (24) pouvant être appliquée directement ou indirectement contre la partie de surface supérieure (4) du corps de toilette (2).

10. Dispositif de fixation (1) selon l'une des revendications précédentes 1 à 6, **caractérisé en ce que** la structure de fixation est conçue de telle sorte que le boîtier peut être fixé directement au corps de toilette.

11. Dispositif de fixation (1) selon l'une quelconque des revendications précédentes, **caractérisé en ce que** la structure de fixation (14) s'étend en s'éloignant de la surface de butée (15) et de l'espace de réception (13), de telle sorte que la structure de fixation (14) pénètre dans l'ouverture (3) du corps sanitaire (2).

12. Dispositif de fixation (1) selon l'une des revendications précédentes, **caractérisé en ce que**
l'élément de fixation (6) peut être appliqué avec la section de collerette directement ou indirectement par l'intermédiaire d'une rondelle (25) sur la zone de surface supérieure (4); et/ou
**en ce qu'**il existe entre la surface de butée (15) du boîtier (12) et la zone de surface inférieure (5) une structure augmentant le frottement entre la zone de surface inférieure (5) et la surface de butée (15).

13. Ensemble comprenant un corps de toilette (2) avec un passage (3), une zone de surface supérieure (4) se raccordant au passage (3) et une zone de surface inférieure (5) se raccordant au passage (3), et un dispositif de fixation selon l'une des revendications précédentes, l'élément de fixation (6) pénétrant dans le passage (3) à partir de la zone de surface supérieure et, en face, étant en prise par filetage au niveau de la zone de surface inférieure (5) avec l'élément d'écrou (10) logé dans le boîtier (12), le boîtier (12) pouvant être amené en contact avec la zone de surface inférieure (5) par la surface de butée, et dans lequel, lors d'un serrage de l'élément de fixation (6), le dispositif de fixation peut être bloqué par rapport au corps de toilette (2).

14. Procédé de montage d'un dispositif de fixation selon l'une des revendications précédentes 1 à 12 ou d'un ensemble selon la revendication 13, **caractérisé**
**en ce que**, dans une première étape, le boîtier (12) est fixé au corps de toilette (2) avec l'élément d'écrou (10) par l'intermédiaire de la structure de fixation, de telle sorte que la surface de butée (15) peut être amenée en contact avec la zone de surface inférieure (5),
**en ce que**, dans une deuxième étape, l'élément de fixation (6) est guidé avec le filetage extérieur (7) à travers le passage (3) et est vissé dans le filetage intérieur (11) jusqu'à ce que la section de collerette (8) vienne en contact avec la zone de surface supérieure (4), et
**en ce que**, dans une troisième étape, l'élément de fixation (6) est serré.
